# DEMANDE DE BREVET EUROPEEN

(11) **EP 1 361 080 A1**
(43) Date de publication de la demande: **12.11.2003**
(21) Numéro de dépôt: 03005438.1
(22) Date de dépôt: 14.03.2003
(51) Int. Cl.: B60C 23/04

(54) **Dispositif de fixation d'un capteur de pression destiné à être monté dans un pneumatique**

(30) Priorité: 07.05.2002 FR 0205654
(71) Demandeur: Siemens VDO Automotive S.A.S., 31100 Toulouse Cedex 1 (FR)
(72) Inventeur: Fonteneau, Christophe, 31490 Leguevin (FR)

(57) **Abrégé**

Ce dispositif est destiné à la fixation d'un capteur de pression (4) sur une valve (2) d'un pneumatique, la valve (2) comportant un clapet monté dans un corps de valve.

Ce dispositif comporte une tige de liaison (16) fixée à l'une de ses extrémités sur le capteur de pression (4) et à son autre extrémité sur la valve (2). Un passage d'air est aussi prévu pour relier le clapet de la valve au capteur de pression.

## Description

La présente invention concerne un dispositif de fixation d'un capteur de pression destiné à être monté dans un pneumatique.

Il est connu d'équiper un pneumatique, de voiture particulière ou de poids lourd, d'un capteur de pression afin de connaître la pression régnant à l'intérieur de ce pneumatique sans avoir à venir brancher un capteur de pression sur la valve correspondante. On trouve de tels capteurs sur des véhicules équipés d'un système de surveillance de la pression des pneumatiques. Une indication sur la pression est alors donnée au conducteur du véhicule par un affichage au tableau de bord. Plusieurs systèmes de surveillance de la pression des pneus de ce style existent et sont connus de l'homme du métier.

Un pneumatique est monté généralement de façon étanche sur une jante et une valve traverse la jante pour mettre en communication le volume délimité par le pneumatique et la jante avec l'extérieur. La valve permet l'introduction d'air sous pression pour gonfler le pneumatique ou bien, plus rarement, pour laisser s'échapper de l'air hors de ce pneumatique. Dans les systèmes de surveillance de la pression des pneumatiques, le capteur de pression se monte généralement au niveau de la valve à l'intérieur du pneumatique.

Dans les systèmes connus, la valve utilisée est une valve spécifique sur laquelle on vient adapter un capteur de pression. Souvent, le capteur de pression est fixé de manière irréversible sur la valve. Le montage d'un capteur de pression renchérit donc la valve et de plus, dans la plupart des cas, lorsque la valve doit être changée, une partie au moins du capteur doit l'être également.

En outre, la conception des supports de capteur de pression fait que le montage de ceux-ci nécessite un nombre relativement important de pièces et est de ce fait relativement compliqué. De plus, les supports actuels sont adaptés à des valves entièrement métalliques d'un coût supérieur aux valves le plus couramment utilisées qui sont en caoutchouc (avec un insert métallique).

La présente invention a alors pour but de fournir un dispositif de fixation d'un capteur sur une valve pouvant s'adapter sur une valve dont le corps est en caoutchouc, ou similaire. Le prix de revient de l'ensemble du capteur monté sur la valve sera de préférence inférieur aux prix actuellement constatés. Le dispositif selon l'invention permettra de préférence d'avoir deux sous-ensembles, un premier formé par la valve et un second intégrant l'électronique du capteur. Enfin, le montage du capteur sur la valve sera de préférence simplifié par rapport aux montages connus actuellement.

A cet effet, la présente invention propose un dispositif de fixation d'un capteur de pression sur une valve d'un pneumatique, la valve comportant un clapet monté dans un corps de valve.

Selon l'invention, ce dispositif comporte une tige de liaison fixée à l'une de ses extrémités sur le capteur de pression et à son autre extrémité sur la valve, et un passage d'air relie le clapet de la valve au capteur de pression.

Ce dispositif de fixation introduit une pièce de liaison supplémentaire qui n'existe pas sur les dispositifs actuels qui sont montés directement sur une valve. Cette pièce s'adapte d'une part au capteur et d'autre part à la valve. Grâce à cette pièce de liaison, il n'est plus nécessaire, dans une large mesure, d'adapter la valve au capteur de pression ou inversement. Le montage sur tout type de valve devient possible. Le montage est aussi simplifié.

Dans une forme de réalisation préférentielle, la tige de liaison est une tige tubulaire et elle assure ainsi le passage de l'air entre le clapet et le capteur de pression.

L'extrémité de la tige de liaison du côté du capteur de pression est par exemple filetée et coopère avec un écrou monté prisonnier dans le capteur de pression.

Dans une autre variante de réalisation, la liaison entre la tige de liaison et la valve est par exemple assurée par des moyens d'accrochage comportant une pièce déformable élastiquement se déformant radialement lorsqu'on exerce sur elle une contrainte axiale. Cette pièce déformable élastiquement est avantageusement une étoupe.

Dans la variante de réalisation décrite au paragraphe précédent, on peut prévoir que le corps de valve est fixé sur une jante et s'étend de part et d'autre d'un alésage prévu dans la jante pour le montage du corps de valve, et que la pièce déformable élastiquement se trouve, en position montée, à l'extérieur de la jante et du pneumatique. En choisissant alors le diamètre extérieur de la pièce déformable élastiquement de telle sorte qu'à l'état libre il soit inférieur au diamètre de l'alésage prévu dans la jante et que comprimé il soit sensiblement égal ou même supérieur au diamètre de cet alésage, un démontage du capteur devient alors quasi-impossible sans relâcher la contrainte au niveau de la pièce élastiquement déformable.

Toujours dans cette même variante de réalisation, la tige de liaison peut être une tige de compression tubulaire munie d'une tête de compression, cette dernière peut alors être montée coulissante dans une douille d'appui, et la pièce déformable élastiquement peut aussi être traversée par la tige de compression et se trouver prise en sandwich entre l'extrémité de la douille d'appui éloignée du capteur de pression et la tête de compression. Une autre liaison avantageuse au niveau du capteur de pression est par exemple telle que la tige de liaison est montée pivotante sur deux paliers solidaires du capteur de pression et réalisés chacun sur une patte en forme de came, chaque patte prenant appui sur l'extrémité de la douille d'appui se trouvant du côté du capteur de pression. Un simple pivotement du capteur de pression suffit alors, grâce aux cames de forme appropriée, à tirer la tige de compression et à agir sur l'élément élastiquement déformable pour obtenir un bon accrochage.

Au niveau de la liaison entre la valve et la tige de liaison, on peut par exemple aussi prévoir un filetage et un taraudage de manière à assurer la liaison par un vissage.

La tige de liaison utilisée dans la présente invention est de préférence métallique et elle peut donc ainsi servir d'antenne pour le capteur de pression.

Les détails et avantages de la présente invention ressortiront mieux de la description qui suit, faite en référence au dessin schématique annexé sur lequel :
La figure 1 représente en coupe longitudinale un premier dispositif de fixation selon l'invention d'un capteur de pression sur une valve,
La figure 2 représente en coupe longitudinale une seconde forme de réalisation d'un dispositif de fixation selon l'invention d'un capteur sur une valve,
La figure 3 représente en coupe longitudinale une troisième forme de réalisation d'un dispositif de fixation selon l'invention d'un capteur sur une valve, et
La figure 4 représente en coupe longitudinale une quatrième forme de réalisation d'un dispositif de fixation selon l'invention d'un capteur sur une valve.

Sur chacune des figures, on retrouve une valve 2, un capteur de pression 4, un dispositif de fixation selon l'invention permettant la fixation du capteur de pression 4 sur la valve 2. On remarque aussi sur les figures la représentation d'un alésage 6 réalisé dans une jante 8 représentée partiellement.

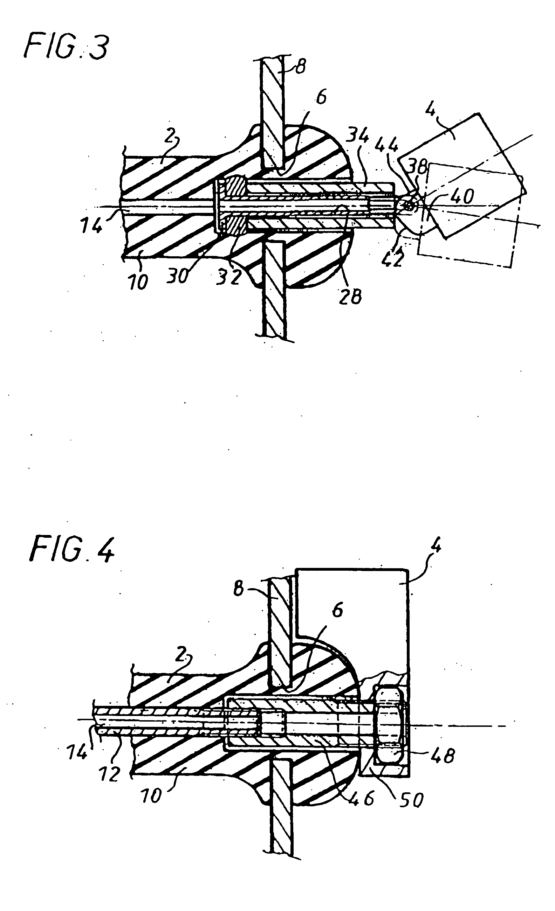

La valve 2 comporte un corps de valve 10 dans lequel est monté un tube métallique 12 (représenté uniquement sur la figure 4) portant un clapet (non représenté) empêchant en position fermée tout passage d'air et permettant, en position ouverte, de faire passer l'air dans un sens ou dans l'autre.

On appelle ici capteur de pression 4 l'ensemble formé par le capteur proprement dit, le support de ce capteur et toute l'électronique associée permettant de traiter l'information fournie par le capteur et de l'envoyer à un récepteur.

La jante 8 est une jante quelconque de véhicule automobile ou de poids lourd. Elle porte un pneumatique (non représenté) gonflé d'air à une pression prédéterminée. La jante et le pneumatique définissent un espace fermé étanche et la valve 2 permet, en position ouverte, d'introduire de l'air dans le pneumatique ou, plus rarement, d'en laisser s'échapper tandis qu'elle assure l'étanchéité du pneumatique en position fermée. Sur les figures, la partie de la valve représentée à droite de la jante se trouve à l'intérieur du pneumatique tandis que la partie représentée à gauche de la jante se trouve à l'extérieur de celui-ci.

Le corps de valve 10 est par exemple en caoutchouc. La valve 2 est donc du type de celle connue de l'homme du métier sous le nom de "snap-in". Le corps de valve 10 présente une rainure périphérique pour recevoir le bord de l'alésage 6. Le montage de la valve se fait avant montage du pneumatique, en plaçant la valve à l'intérieur de la jante (c'est-à-dire là où viendra le pneumatique), en faisant ensuite passer la tête de la valve dans l'alésage 6 puis en tirant, généralement à l'aide d'un outil, sur cette tête de valve jusqu'à ce que le bord de l'alésage 6 vienne prendre place dans la rainure périphérique du corps de valve 10. Cette position montée est représentée sur les quatre figures du dessin.

Le corps de valve 10 présente un canal intérieur 14. Ce dernier assure la liaison entre l'intérieur du pneumatique et l'extérieur de celui-ci. Il loge notamment le tube 12 et tout le mécanisme de la valve. Dans la présente invention, ce canal reçoit également, au moins en partie, les moyens permettant de fixer le capteur de pression 4 sur la valve 2.

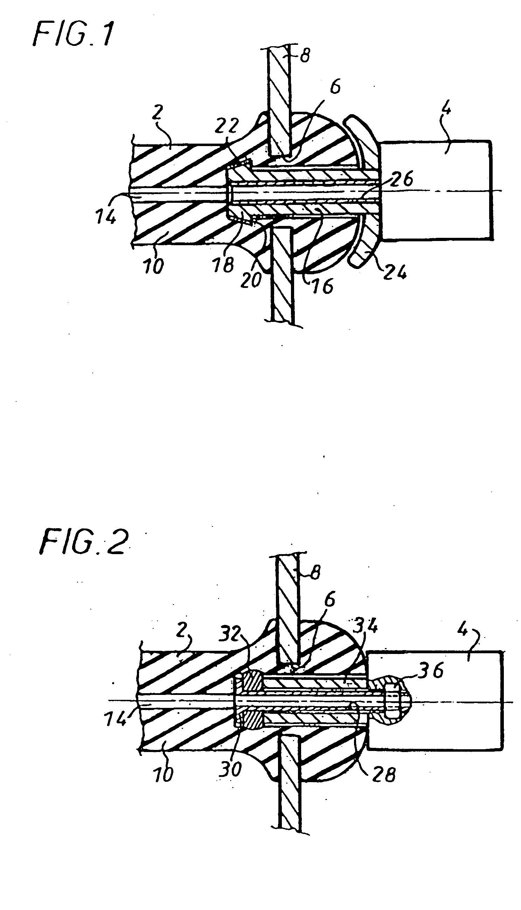

Dans la première forme de réalisation représentée au dessin (figure 2) une tige tubulaire 16 dépasse du capteur de pression 4. Elle peut être fixée sur le capteur de pression 4 par tous moyens : soudure, vissage, etc....

L'extrémité libre de la tige tubulaire 16 présente une forme de crochet. Cette extrémité comporte une partie tronconique 18. L'extrémité libre de la tige tubulaire 16 forme le sommet de la partie tronconique 18. La base de cette partie tronconique forme un épaulement 20. Le reste de la tige tubulaire 16 est alors de diamètre constant entre la partie tronconique 18 et le capteur 4. Ce diamètre de la tige tubulaire 16 correspond par exemple au diamètre du sommet de la partie tronconique 18. Le canal intérieur 14 du corps de valve 10 présente du côté du capteur de pression un logement de forme complémentaire à la forme de la tige tubulaire 16. Ce logement comporte notamment une zone tronconique 22 pour recevoir la partie tronconique 18. Cette zone tronconique 22 est de préférence, comme représenté sur la figure 1, placée à l'extérieur de la jante. Ainsi lorsque la tige tubulaire 16 est introduite dans son logement, il faut que la partie tronconique 18 passe à travers l'alésage 6 pour venir se loger dans la zone tronconique 22. Ceci permet une meilleure fixation.

Le montage du capteur de pression 4 se fait alors simplement en introduisant la tige tubulaire 16 dans le canal intérieur 14 de la valve 2 jusqu'à ce que la partie tronconique 18 de la tige tubulaire 16 vienne se loger dans la zone tronconique 22. Le maintien du capteur de pression est alors assuré par concordance de forme de la tige tubulaire 16 et du logement destiné à la recevoir.

Pour favoriser le maintien du capteur de pression sur la valve, il est possible d'équiper le capteur de pression 4 d'une coupelle 24. L'air sous pression dans le pneumatique appuie alors sur la coupelle 24 pour maintenir celle-ci, et par conséquent aussi le capteur, sur la valve 2.

Sur la figure 1, on a également représenté un tube en cuivre 26 qui prend place à l'intérieur de la tige tubulaire 16 et sert d'antenne au dispositif émetteur du capteur de pression 4. Pour avoir une antenne assez longue, on peut prévoir, si nécessaire, que le tube en cuivre 26 vienne au contact du tube 12 qui est généralement métallique.

Dans la forme de réalisation représentée sur la figure 2, le dispositif de fixation comporte une tige de compression 28 filetée à une extrémité et présentant une tête de compression 30 à son autre extrémité. Ce dispositif de fixation comporte également une étoupe 32, une douille d'appui 34 et un écrou 36.

La tête de compression 30 se présente sous la forme d'un disque fixé perpendiculairement à la tige de compression 28 et à l'extrémité de celle-ci. L'ensemble formé par la tige de compression 28 et la tête de compression 30 est un ensemble tubulaire traversé donc de part en part par un canal destiné à permettre le passage de l'air.

L'écrou 36 est monté prisonnier dans le capteur de pression 4. L'extrémité filetée de la tige de compression 28 est vissée dans l'écrou 36. L'étoupe 32 et la douille d'appui 34 sont montées sur la tige de compression et prennent place entre la tête de compression 30 et le capteur de pression 4. En vissant la tige de compression 28 dans l'écrou 36, la tête de compression 30 se rapproche du capteur de pression 4. La douille d'appui 34 vient alors reposer contre le capteur de pression 4 et l'étoupe 32 est comprimée entre la tête de compression 30 et la douille d'appui 34. Cet ensemble est placé dans le canal intérieur 14 du corps de valve 10. Lorsque l'étoupe 32 est comprimée, son diamètre extérieur augmente et l'étoupe vient alors prendre appui sur la paroi intérieure du canal 14.

Le dispositif de fixation est configuré de telle sorte que, en position montée, l'étoupe 32 se trouve, par rapport à la jante 8, du côté opposé au capteur de pression 4. L'étoupe 32, au repos, a alors un diamètre extérieur inférieur au diamètre de l'alésage 6 de manière à pouvoir être introduite dans le canal intérieur 14 jusqu'à sa position de montage. Avantageusement, lorsque l'étoupe est comprimée, son diamètre extérieur est sensiblement égal, voire supérieur, au diamètre de l'alésage 6. Compte tenu alors de l'épaisseur de la paroi du corps de valve 10 au niveau de l'alésage 6, tout retrait de l'étoupe comprimée hors du canal intérieur 14 est interdit. On assure ainsi une excellente fixation du capteur 4 sur la valve 2.

Le montage de cet ensemble est très simple. Une fois la valve 2 montée dans l'alésage 6, la tige de compression, l'étoupe 32 et la douille d'appui 34 sont mises en place dans le canal intérieur 14. L'extrémité filetée de la tige de compression 28 dépasse hors du corps de valve 10. Il suffit alors de venir visser cette extrémité filetée dans l'écrou 36 maintenu prisonnier dans le capteur de pression. Le couple de serrage permettant d'obtenir une déformation suffisante de l'étoupe 32 peut être prédéterminé. Une fois ce couple de serrage atteint, le capteur de pression est fixé sur la valve 2.

La figure 3 représente une variante de réalisation du dispositif de fixation représenté sur la figure 2. On retrouve dans cette variante de réalisation le principe d'un presse étoupe. La variante porte là sur la liaison entre la tige de compression 28 et le capteur de pression 4.

Ici, l'extrémité de la tige de compression 28 opposée à la tête de compression 30 n'est plus filetée mais porte un axe 38 perpendiculaire à la tige de compression 28. Le capteur de pression 4 présente deux pattes 40, chaque patte recevant un palier pour une extrémité de l'axe 38. Chaque palier présente une première face 42 et une seconde face 44, chacune de ces faces étant destinée à venir en appui contre la douille d'appui 34. Les deux faces d'appui 42 et 44 sont sensiblement disposées à angle droit. Les paliers de l'axe 38 sont disposés de manière à se trouver à une distance différente de la première face 42 et de la seconde face 44. Chacun de ces paliers est relativement proche de la première face d'appui 42 et est éloigné de la seconde face d'appui 44. Ainsi, en faisant pivoter le capteur de pression 4 autour de l'axe 38, on agit sur la position relative de la tige de compression 28 par rapport à la douille d'appui 34. Lorsque la douille d'appui est en appui contre la première face d'appui 42, l'étoupe 32 est en position de repos tandis que lorsque la douille d'appui 34 est en appui contre la seconde surface de l'appui 44, l'étoupe 32 est comprimée et son diamètre extérieur est maximal.

Pour le montage du capteur de pression 4 sur la valve 2, on monte l'étoupe 32 et la douille d'appui 34 sur la tige de compression 28. L'axe 38 est ensuite mis en place pour relier cet ensemble au capteur de pression 4. Pour mettre l'axe 38 en place, on met de préférence la bague d'appui 34 en appui contre la première surface d'appui 42 des pattes 40. La tige de compression 28, avec l'étoupe 32 et la douille d'appui 34, est alors introduite à fond dans le canal intérieur 14 du corps de valve 10. On fait ensuite pivoter le capteur de pression 4 de telle sorte que la seconde face d'appui 44 des pattes 40 vienne contre la douille d'appui 34. L'étoupe 32 est ainsi comprimée et le capteur 4 est solidement fixé sur la valve 2. Dans cette forme de réalisation aussi, l'étoupe 32 se trouve, par rapport à la jante 8, du côté opposé au capteur de pression 4.

Cette forme de réalisation permet tout d'abord un montage plus simple du capteur de pression. Elle présente également l'avantage de pouvoir placer, grâce au pivotement, le capteur de pression en fond de jante, ce qui permet de limiter les contraintes exercées sur le capteur de pression lorsque la roue correspondante roule.

La quatrième forme de réalisation représentée sur la figure 4 permet également de placer le capteur de pression 4 en fond de jante. Le dispositif de fixation comporte ici une tige tubulaire 46 et un écrou 48.

La tige tubulaire 46 est taraudée à une extrémité et filetée à son autre extrémité. Dans cette forme de réalisation, on prévoit que le tube 12 est fileté à son extrémité se trouvant à l'intérieur du corps de valve 10. Ce filetage vient coopérer avec le taraudage de la tige tubulaire 46. A l'autre extrémité, la partie filetée de la tige tubulaire 46 coopère avec l'écrou 48.

Le montage de l'ensemble est réalisé en venant visser tout d'abord la tige tubulaire sur le tube 12 de la valve 2, puis en venant placer le capteur 4 sur la valve 2 et en serrant l'écrou 48 sur la tige tubulaire 46. Dans le cas de figure représenté ici, le capteur de pression est muni d'une patte 50 présentant un alésage pour venir se placer sur la tige tubulaire 46 et destiné à recevoir l'écrou 48. Cette patte 50 est conformée de telle sorte que lors du serrage de l'écrou 48 le capteur de pression 4 vienne se plaquer en fond de jante.

Dans les formes de réalisation des figures 2 à 4, on peut prévoir que la tige de compression 28 ou la tige tubulaire 46 sont réalisées en métal conducteur. Ces pièces peuvent ainsi servir d'antenne émettrice pour le capteur de pression 4. On peut également prévoir, comme représenté sur la figure 1, qu'un tube en cuivre s'étende, à l'intérieur ou à l'extérieur du dispositif de fixation, pour constituer une antenne émettrice.

Dans toutes ces formes de réalisation, on remarque qu'on arrive à obtenir une excellente fixation d'un capteur de pression sur une valve de type "snap-in". Cette valve est peu modifiée par rapport à une valve de ce type de l'art antérieur. Il convient uniquement de modifier la forme du canal intérieur du corps de valve en caoutchouc pour s'adapter à la forme du dispositif de fixation et il faut, dans certains cas, raccourcir le tube portant le mécanisme de la valve (et éventuellement rajouter un filetage pour la quatrième variante de réalisation). Ces modifications sont mineures et n'entraînent pas de surcoût important de la valve.

On remarque également que les dispositifs de fixation présentés plus haut permettent d'avoir d'une part la valve et d'autre part le capteur de pression. Même dans la première forme de réalisation, le capteur de pression peut facilement être dissocié de la valve. En effet, il suffit de prévoir une liaison réversible entre le dispositif de fixation décrit et le capteur de pression 4. Il est donc ainsi possible de changer à moindre coût une valve d'un pneumatique sans avoir du même coût à changer le capteur de pression (en tout ou partie).

La présente invention ne se limite pas aux formes de réalisation décrites ci-dessus à titre d'exemples non limitatifs. Elle concerne également toutes les variantes de réalisation à la portée de l'homme du métier, dans le cadre des revendications ci-après.

## Revendications

1. Dispositif de fixation d'un capteur de pression (4) sur une valve (2) d'un pneumatique, la valve (2) comportant un clapet monté dans un corps de valve, le dit dispositif comportant une tige tubulaire de liaison (16 ; 28 ; 46) fixée à l'une de ses extrémités sur le capteur de pression (4) et à son autre extrémité sur la valve (2), et un passage d'air reliant le clapet de la valve au capteur de pression, le dit dispositif étant **caractérisé en ce que** la liaison entre la tige de liaison (28) et la valve (2) est assurée par des moyens d'accrochage comportant une pièce (32) déformable élastiquement se déformant radialement lorsqu'on exerce sur elle une contrainte axiale.

2. Dispositif de fixation selon la revendication 1, **caractérisé en ce que** la pièce déformable élastiquement est une étoupe (32).

3. Dispositif de fixation selon la revendication 1 ou 2, **caractérisé en ce que** le corps de valve (10) est fixé sur une jante (8) et s'étend de part et d'autre d'un alésage (6) prévu dans la jante pour le montage du corps de valve (10), et **en ce que** la pièce (32) déformable élastiquement se trouve, en position montée, à l'extérieur de la jante (8) et du pneumatique.

4. Dispositif de fixation selon l'une quelconque des revendications 1 à 3, **caractérisé en ce que** la tige de liaison est une tige de compression (28) tubulaire munie d'une tête de compression (30), **en ce que** la tige de compression (28) est montée coulissante dans une douille d'appui (34), et **en ce que** la pièce (32) déformable élastiquement est traversée par la tige de compression (28) et se trouve prise en sandwich entre l'extrémité de la douille d'appui (34) éloignée du capteur de pression (4) et la tête de compression (30).

5. Dispositif de fixation selon la revendication 4, **caractérisé en ce que** la tige de liaison (28) est montée pivotante sur deux paliers solidaires du capteur de pression (4) et réalisés chacun sur une patte (40) en forme de came, chaque patte (40) prenant appui sur l'extrémité de la douille d'appui (34) se trouvant du côté du capteur de pression (4).

6. Dispositif de fixation selon l'une quelconque des revendications 1 à 5, **caractérisé en ce que** la tige de liaison (28 ; 46) est métallique et sert d'antenne pour le capteur de pression (4).
